(19)

Europäisches
Patentamt
European
Patent Office
Office européen
des brevets

(11) **EP 3 512 086 A1**

(12) **EUROPEAN PATENT APPLICATION**
published in accordance with Art. 153(4) EPC

(43) Date of publication:
**17.07.2019 Bulletin 2019/29**

(21) Application number: **17848942.3**

(22) Date of filing: **02.05.2017**

(51) Int Cl.:
**H02M 3/158** $^{(2006.01)}$

(86) International application number:
**PCT/KR2017/004700**

(87) International publication number:
**WO 2018/048057 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.09.2016 KR 20160114643**

(71) Applicant: **M2 Power Co., Ltd.
Gunpo-si, Gyeonggi-do 15809 (KR)**

(72) Inventors:
• **HONG, Sung Soo
Seoul 08003 (KR)**
• **JUNG, Kwang Soon
Seoul 02811 (KR)**
• **CHOO, Jae Ho
Seoul 03382 (KR)**

(74) Representative: **Viering, Jentschura & Partner
mbB
Patent- und Rechtsanwälte
Am Brauhaus 8
01099 Dresden (DE)**

(54) **DC-DC CONVERTER AND TWO-STAGE POWER CONVERTER COMPRISING SAME**

(57)     The present invention relates a DC-DC converter and a two-stage power converter including the same. The DC-DC converter includes a plurality of active switches. Some of the plurality of active switches operate with a variable duty ratio D, and the remaining active switches operate with a fixed duty ratio. An input-output voltage conversion ratio of the DC-DC converter is determined based on the variable duty ratio D and an output of the DC-DC converter is controlled by adjusting the variable duty ratio D.

FIG.7a

## Description

### Technical Field

The present invention relates to a DC-DC converter and a two-stage power converter including the same and, in particular, to a converter capable of step-up operation and step-down operation and reducing the number of switches by sharing switches in the case of configuring a two-stage power converter in combination with a bus converter.

### Background Art

Among non-isolated DC-DC converters, a buck-converter, a boost-converter, a buck-boost converter or the like are examples of widely-used converters.

The buck-converter is a step-down type converter that is usable only under the condition that an output voltage is lower than an input voltage. The boost-converter is a step-up type converter that is usable only under the condition that an output voltage is higher than an input voltage.

The buck-converter or the boost-converter require a wide input voltage range and a wide output voltage range, so that it is difficult to use them when there are both an output voltage larger than an input voltage and an output voltage smaller than an input voltage. The buck-boost converter is capable of step-up operation and step-down operation but it is difficult to use it when a positive voltage is required since an output voltage is inverted with respect to an input voltage and is outputted as a negative voltage.

Conventionally, in order to overcome such disadvantages, a buck-boost converter has been used which is capable of step-up operation and step-down operation and uses four active switches having a non-inverted output. Since the buck-boost converter can be constituted by a buck-converter or a boost-converter and power conversion efficiency is high, the buck-boost converter has been used recently.

However, the conventional buck-boost converter requires a separate integrated circuit (IC) component for smooth-transition so as to control a stable output voltage when being switched from the buck-converter to the boost-converter, or from the boost-converter to the buck-converter at a threshold point at which an input voltage has the same value as that of an output voltage, and a somewhat more complicated control method should be used.

On the other hand, when an isolated converter having a wide variable input/output voltage range and high power conversion efficiency is required, it is general to configure and use a two-stage converter by coupling a buck-boost converter using four active switches to a bus converter in a cascade manner.

As representative examples of the bus converter, there are a half-bridge converter, a full-bridge converter, a Forward-Flyback converter, an LLC resonant converter, and the like, and the bus converter is conventionally operated and driven with a fixed frequency and a duty ratio of 0.5.

However, the two-stage power converter, which is constituted by a buck-boost converter using four active switches and a bus converter in which main switches on the primary side of a transformer have a half-bridge structure or a full-bridge structure, requires many switching components, resulting in complicated circuit configuration and low price competition.

### Disclosure

### Technical Problem

The present invention has been made keeping in mind the above problems occurring in the prior art, and an object of the present invention is to provide a buck-boost converter capable of step-up operation and step-down operation without a separate component or complicated control at a threshold point at which an input voltage is equal to an output voltage.

Another object of the present invention is to provide a two-stage power converter capable of step-up operation and step-down operation, which includes a buck-boost converter and a bus converter in which switches on the primary side of a transformer are configured in a half-bridge structure or a full-bridge structure, and in which the number of switches on the primary side of the two-stage power converter is reduced.

### Technical Solution

In order to accomplish the above object, according to one aspect of the present invention, there is provided a DC-DC converter capable of step-up operation and step-down operation, including a plurality of active switches, wherein some of the plurality of active switches operate with a variable duty ratio D, and the remaining active switches operate with a fixed duty ratio

An input-output voltage conversion ratio of the DC-DC converter may be determined based on the variable duty ratio (D) and an output of the DC-DC converter is controlled by adjusting the variable duty ratio (D).

The plurality of active switches may include four active switches of a first switch ($M_1$), a second switch ($M_2$), a third switch ($M_3$), and a fourth switch ($M_4$), and the DC-DC converter may include a first inductor.

The second switch may be replaceable with a diode.

The DC-DC converter may be formed of a buck-boost converter. When the second switch is an active switch, the first switch and the second switch may operate alternately with variable duty ratios of D and 1-D respectively and the third and fourth switches may operate alternately with the fixed duty ratio of 0.5, and operation conversion between a buck converter and a boost converter may be performed at a time point at which an input voltage and an output voltage of the buck-boost converter become equal to each other.

A driving frequency of the first and second switches may be different from a driving frequency of the third and fourth switches, and a phase of the first and second switches may be different from a phase of the third and fourth switches.

In another embodiment of the present invention, there may be provided a two-stage power converter.

A two-stage power converter according to an embodiment of the present invention may include a buck-boost converter unit including the DC-DC converter according to an embodiment of the present invention, a bus converter unit including a bus converter connected in a full-bridge or half-bridge topology, and an inductor unit connected to the buck-boost converter unit and the bus converter unit and including at least one inductor, wherein, when the bus converter is connected in the full-bridge topology, the bus converter further may include a fifth switch ($M_5$) and a sixth switch ($M_6$), and the third and fourth switches of the buck-boost converter unit may be shared with the bus converter.

When the bus converter unit according to an embodiment of the present invention is connected in the half-bridge topology, a driving frequency of the first and second switches may be different from a driving frequency of the third and fourth switches, and a phase of the first and second switches may be different from a phase of the third and fourth switches.

When the bus converter unit is connected in the full-bridge topology, a driving frequency of the first and second switches may be different from a driving frequency of the third and fourth switches, and a phase of the first and second switches may be different from a phase of the third and fourth switches.

When the bus converter unit is connected in the full-bridge topology, the inductor unit may include a first inductor and a second inductor, a current flowing through a bridge including the third and fourth switches and a current flowing through a bridge including the fifth and sixth switches, via the first inductor and the second inductor may flow symmetrically to each other, and the inductor unit may include a coupled-inductor connected to the buck-boost converter unit and the bus converter unit by electromagnetic coupling.

When the bus converter unit 200 of the two-stage power converter 10 according to an embodiment of the present invention is connected in the full-bridge topology, a duty ratio and a turned-on time point of the third switch 130 are identical to a duty ratio and a turned-on time point of the sixth switch 220, and a duty ratio and a turned-on time point of the fourth switch 140 are identical to a duty ratio and a turned-on time point of the fifth switch 210.

**Advantageous Effects**

According to the buck-boost converter according to the embodiment of the present invention, it is possible to perform step-up operation and step-down operation not requiring smooth transition regardless of input and output voltage conditions, thereby simplifying a control method.

Furthermore, according to the buck-boost converter according to the embodiment of the present invention, it is possible to share switches between the buck-boost converter and the primary side of the transformer of the bus converter and reduce the number of switch components to simplify circuit configuration.

**Description of Drawings**

FIG. 1 illustrates a circuit of a buck-boost converter using four active switches;

FIG. 2 illustrates a block diagram of a conventional two-stage power converter including the buck-boost converter of FIG. 1 and a bus converter;

FIG. 3a illustrates a conventional switch driving signal for operating the circuit of FIG. 1 as a buck converter;

FIG. 3b illustrates a conventional switch driving signal for operating the circuit of FIG. 1 as a boost converter;

FIG. 4a illustrates a switch driving signal for a buck-boost converter according to an embodiment of the present invention;

FIG. 4b illustrates a switch driving signal for a buck-boost converter when driving frequencies of switches are different from each other, according to an embodiment of the present invention;

FIG. 4c illustrates a switch driving signal for a buck-boost converter when there is a phase difference, according to an embodiment of the present invention;

FIG. 5a illustrates a switch driving signal and the waveform of a voltage applied to a first inductor when a duty ratio of a first switch is equal to and less than 0.5, according to an embodiment of the present invention;

FIG. 5b illustrates a switch driving signal and the waveform of a voltage applied to a first inductor when a duty ratio of a first switch is equal to and greater than 0.5, according to an embodiment of the present invention;

FIG. 6a illustrates a circuit diagram of a two-stage power converter using a conventional buck-boost converter and a half-bridge type bus converter;

FIG. 6b illustrates a circuit diagram of a two-stage power converter using a conventional buck-boost converter and a full-bridge type bus converter;

FIG. 7a illustrates a circuit diagram of a two-stage power converter using a half-bridge type bus converter according to an embodiment of the present invention;

FIG. 7b illustrates a circuit diagram of a two-stage power converter using a full-bridge type bus converter according to an embodiment of the present invention;

FIG. 7c illustrates a circuit diagram of a two-stage power converter having first and second inductors according to an embodiment of the present invention; and

FIG. 7d illustrates a circuit diagram of a two-stage power converter having a coupled-inductor according to an embodiment of the present invention.

## Mode for Invention

These embodiments will be described with reference to the accompanying drawings in sufficient detail to enable those skilled in the art to practice the invention. This invention may, however, be embodied in many different forms and should not be construed as limited to the embodiments set forth herein. In addition, parts irrelevant to description are omitted in the drawings in order to clearly explain the present invention. Similar parts are denoted by similar reference numerals throughout this specification.

Hereinafter, the terms used in the specification will be briefly described, and then the present invention will be described in detail.

The terms used in this specification are those general terms currently widely used in the art in consideration of functions in regard to the present invention, but the terms may vary according to the intention of those of ordinary skill in the art, precedents, or new technology in the art. Also, specified terms may be selected by the applicant, and in this case, the detailed meaning thereof will be described in the detailed description of the invention. Thus, the terms used in the specification should be understood not as simple names but based on the meaning of the terms and the overall description of the invention.

Throughout the specification, it will also be understood that when a component "includes" an element, unless there is another opposite description thereto, it should be understood that the component does not exclude another element but may further include another element. In addition, terms such as "... unit", "... module", or the like refer to units that perform at least one function or operation, and the units may be implemented as hardware or software or as a combination of hardware and software. Throughout this specification, when a part is referred to as being "connected" to another part, the part may be "directly connected" or "indirectly connected" via an intervening part.

In this specification, "bus converter" may refer to a converter that does not change a duty ratio or perform modulation of a switching frequency as in an LLC resonant converter so as to control an output voltage or current, unlike a conventional converter that controls an output current or an output voltage through change in the duty ratio D or modulation of the switching frequency, but is not limited to a particular circuit configuration or topology.

In addition, "D" refers to a duty ratio, and an output voltage may be controlled by regulating the duty ratios of switches which alternately conduct a current. In a switching method, the duty ratio may have a value from 0 to 1.

Active switches according to an embodiment of the present invention are not limited to specific type of switches, and may be substituted with a variety of active switches which are "turned on" and "turned off" when an external voltage or an external current is applied thereto. When parasitic diodes coupled in parallel to the substituted switches do not exist due to the features of the switches, separate diodes connected in parallel to the switches may be required.

Also, an additional driving circuit may be used to amplify a voltage or a current in inputting an external voltage or current to active switches or to generate a voltage required for a source terminal of a switch to be targeted.

Herein, a "control method" may be referred to encompass a particular switching scheme in addition to control for current and voltage.

A buck-converter is a step-down type converter that is usable only under the condition that an output voltage is lower than an input voltage and a boost-converter is a step-up converter that is usable only under the condition that an output voltage is higher than an input voltage.

The buck-converter or the boost-converter require a wide input voltage range and a wide output voltage range, so that it is difficult to use them when there are both an output voltage larger than an input voltage and an output voltage smaller than an input voltage. The buck-boost converter is capable of step-up operation and step-down operation but it is difficult to use it when a positive voltage is required since an output voltage is inverted with respect to an input voltage and is outputted as a negative voltage.

Conventionally, in order to overcome such disadvantages, a buck-boost converter has been used which is capable of step-up operation and step-down operation and uses four active switches having a non-inverted output. Since the buck-boost converter can be constituted by a buck-converter or a boost-converter and power conversion efficiency is high, the buck-boost converter has been used recently.

However, the conventional buck-boost converter requires a separate integrated circuit (IC) component for smooth-transition so as to control a stable output voltage when being switched from the buck-converter to the boost-converter, or from the boost-converter to the buck-converter at a threshold point at which an input voltage has the same value as that of an output voltage, and a somewhat more complicated control method should be used.

Hereinafter, the present invention will be described in detail with reference to the accompanying drawings.

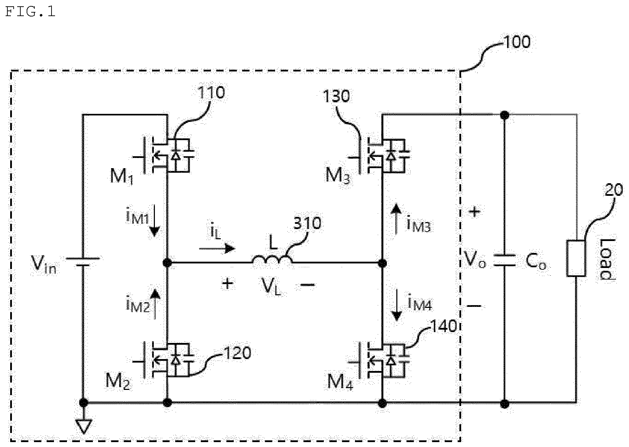

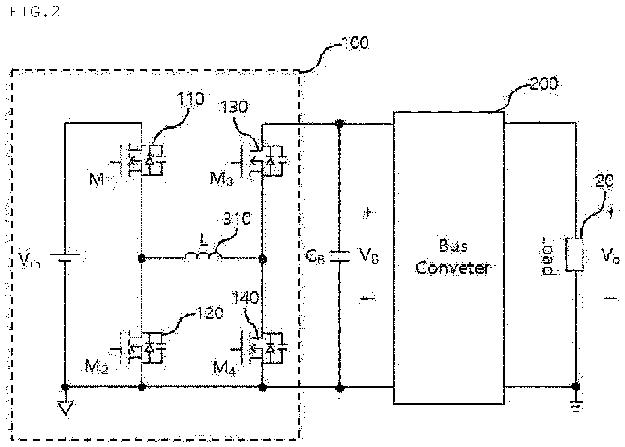

FIG. 1 is a circuit of a buck-boost converter using four active switches and FIG. 2 is a block diagram of a conventional two-stage power converter including the buck-boost converter of FIG. 1 and a bus converter.

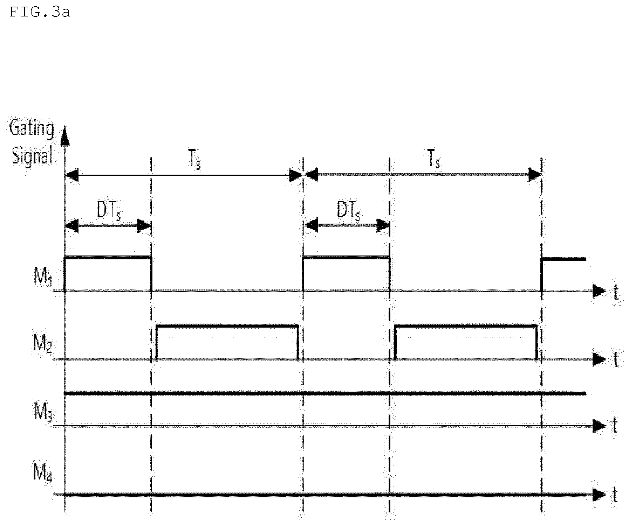

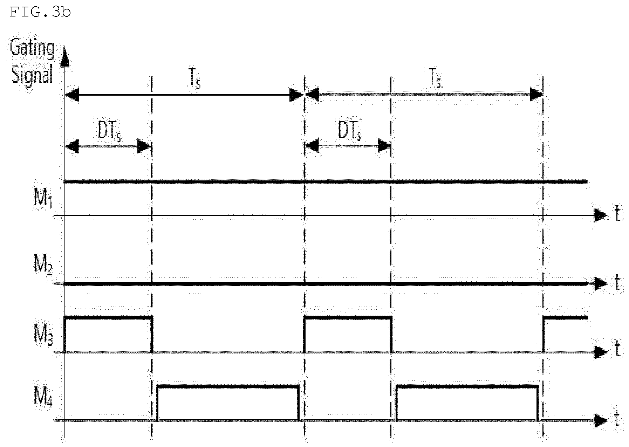

FIG. 3a illustrates a conventional switch driving signal for operating the circuit of FIG. 1 as a buck converter, and FIG. 3b illustrates a conventional switch driving signal for operating the circuit of FIG. 1 as a boost converter.

"$V_{in}$" in FIG. 1 is a power supply of a converter and may be an output of another converter or a or a battery, and "Load" is a load 20 of the converter and may be an input voltage of another power supply device, or may be a power supply or a battery of another electronic product.

A conventional control method for the buck-boost converter using the active switches illustrated in FIG. 1 performs different operations depending on input/output voltage conditions. In other words, as illustrated in FIG. 3a, it is possible to achieve operation as a buck-converter by allowing $M_1$ and $M_2$ to alternately conduct a current in a state in which $M_3$ is always turned on and $M_4$ is always turned off. In addition, as illustrated in FIG. 3b, it is possible to achieve operation as a boost-converter by allowing $M_3$ and $M_4$ to alternately conduct a current in a state in which $M_1$ is always turned on and $M_2$ is always turned off.

The conventional control method makes it possible to configure a buck- or boost-converter circuit by changing switching methods, thereby achieving step-up operation and step-down operation. However, it is disadvantageous that it is necessary to archive smooth transition to change switching methods at a threshold point at which an input voltage and an output voltage are identical to each other, and complicated technology is needed.

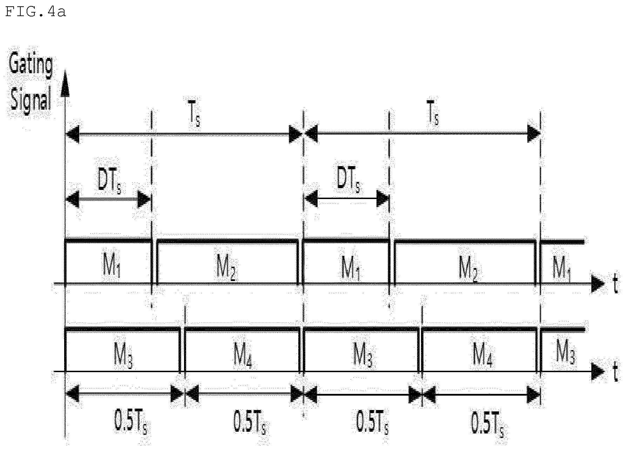

FIG. 4a illustrates a switch driving signal for a buck-boost converter according to an embodiment of the present invention.

As an embodiment of the present invention, a DC-DC converter 100 capable of step-up operation and step-down operation may be provided.

Referring to FIG. 4a, the DC-DC converter 100 according to an embodiment of the present invention includes a plurality of active switches, and some of the plurality of active switches may operate with a variable duty ratio D and the remaining active switches may operate with a fixed duty ratio.

In addition, an input-output voltage conversion ratio of the DC-DC converter 100 may be determined based on the variable duty ratio D and an output of the DC-DC converter 100 may be controlled by adjusting the variable duty ratio D.

The plurality of active switches of the DC-DC converter 100 may be four active switches of a first switch $M_1$ 110, a second switch $M_2$ 120, a third switch $M_3$ 130, and a fourth switch $M_4$ 140, and the DC-DC converter 100 may include a first inductor 310.

In addition, a second switch 120 may be replaceable with a diode that is a passive switch.

In addition, the DC-DC converter 100 may be formed by a buck-boost converter. When the second switch 120 is an active switch, the first switch 110 and the second switch 120 may alternately operate with the variable duty ratios of D and 1-D respectively, and the third switch 130 and the fourth switch 140 may alternately operate with the fixed duty ratio of 0.5 respectively. At a time point at which an input voltage and an output voltage of the buck-boost converter become equal to each other, operation conversion between the buck-converter and the boost converter may be achieved.

In FIG. 4a, "D" is a duty ratio of $M_1$. $M_3$ and $M_4$ may conduct a current alternately with the fixed duty ratio of 0.5, and $M_1$ and $M_2$ may conduct a current alternately with the duty ratio which is variable between 0 and 1. In this case, dead-time for preventing a short circuit between the switches which alternately conduct a current may be present.

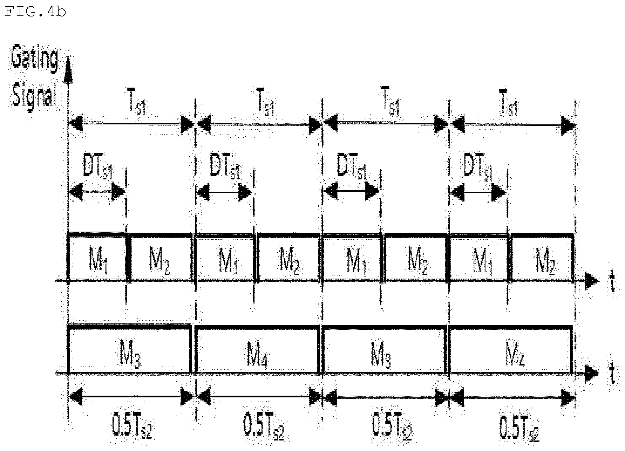

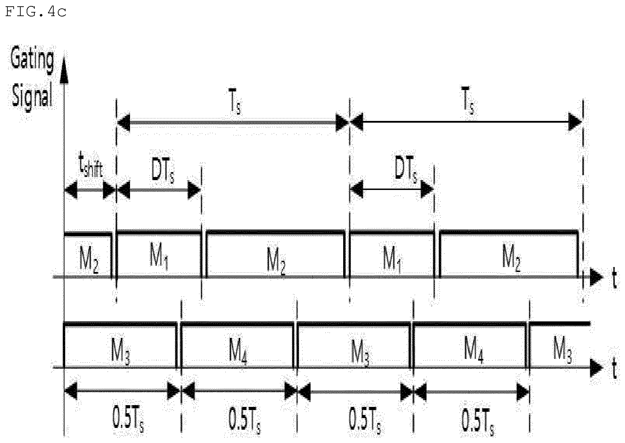

FIG. 4b illustrates a switch driving signal for a buck-boost converter when driving frequencies of switches are different from each other, according to an embodiment of the present invention, and FIG. 4c illustrates a switch driving signal for a buck-boost converter when there is a phase difference, according to an embodiment of the present invention.

In the DC-DC converter 100 according to an embodiment of the present invention, a driving frequency of the first and second switches 110 and 120 may be different from a driving frequency of the third and fourth switches 130 and 140, and a phase of the first and second switches 110 and 120 may be different from a phase of the third and fourth switches 130 and 140 by $t_{shift}$ as illustrated in FIG. 4c.

For example, a switching frequency of $M_1$ and $M_2$ may be two times a switching frequency of $M_3$ and $M_4$ as illustrated in FIG. 4b.

Even through there are a phase difference or different switching frequencies between the switches, the input/output voltage conversion ratios may be equal to each other with respect to the same duty ratio. Even when there are both the phase difference and the different switching frequencies, the input-output voltage conversion ratios may be equal to each other with respect to the same duty ratio.

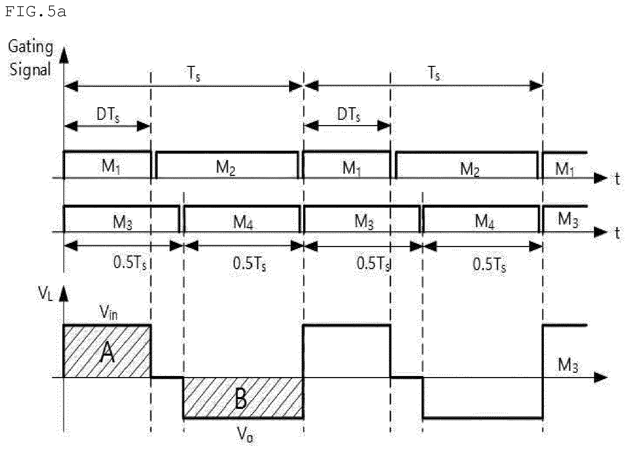

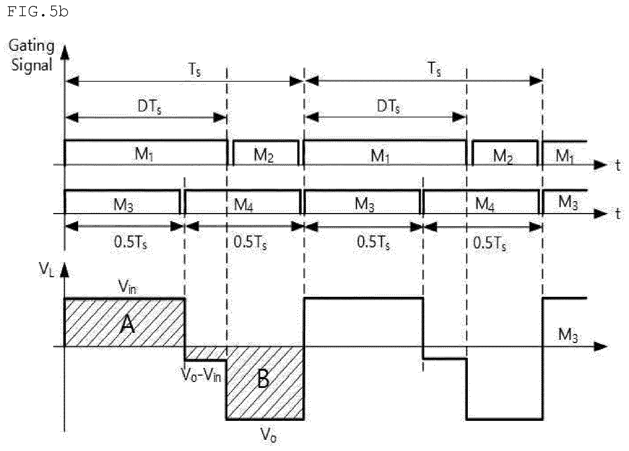

FIG. 5a illustrates a switch driving signal and the waveform of a voltage applied to a first inductor 310 when a duty ratio of the first switch 110 is equal to or less than 0.5, according to an embodiment of the present invention, and FIG. 5b illustrates a switch driving signal and the waveform of a voltage applied to the first inductor 310 when a duty ratio of the first switch 110 is equal to or greater than 0.5, according to an embodiment of the present invention.

Referring to FIGS. 5a and 5b, area "A" and area "B" may be equal to each other within a switching period according to the Volt-Second Balance principle.

Referring to FIG. 5a, Equation 1 may be established when the duty ratio is equal to or less than 0.5.

[Equation 1]

$$V_{in} \cdot D \cdot T_s = V_o \cdot 0.5 \cdot T_s$$

In addition, Equation 2 may be established when the duty ratio is equal to or greater than 0.5.

[Equation 2]

$$V_{in} \cdot 0.5 \cdot T_s = (V_o - V_{in}) \cdot (D - 0.5) \cdot T_s + V_o \cdot (1 - D) \cdot T_s$$

The same input-output voltage conversion ratio may be obtained from Equation 1 and Equation 2 as represented in Equation 3.

[Equation 3]

$$\frac{V_o}{V_{in}} = 2 \cdot D$$

Since the duty ratio D has a value between 0 and 1 in Equation 3, the input-output voltage conversion ratio may have a value between 0 and 2. Therefore, the input-output voltage conversion ratio of the buck-boost converter according to an embodiment of the present invention may be equal to or less than 1 or equal to or greater than 1, thereby achieving step-up operation and step-down operation.

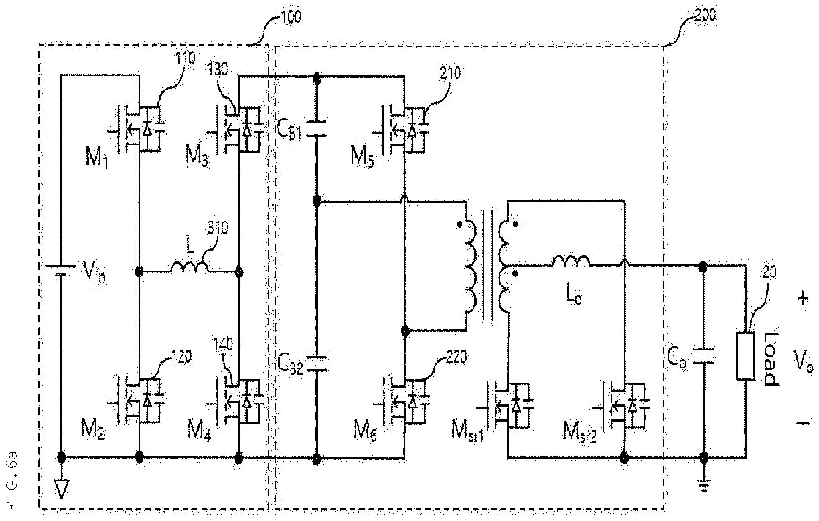

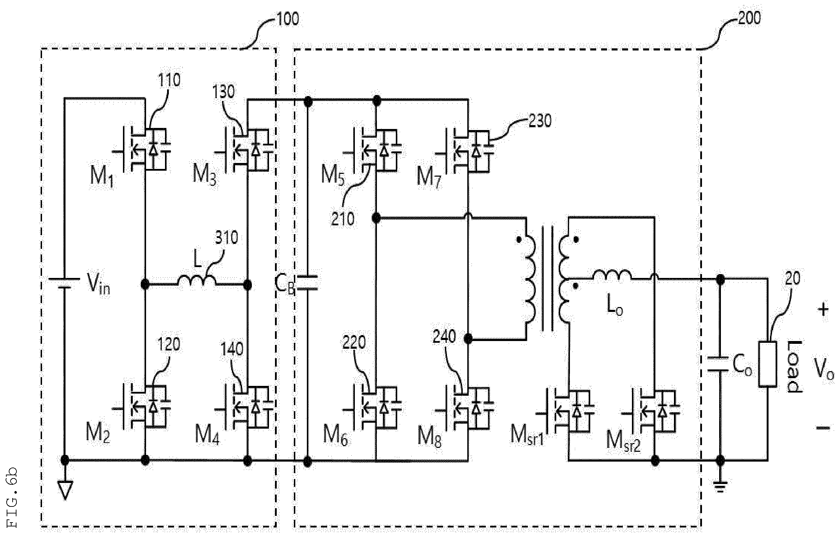

FIG. 6a illustrates a circuit diagram of a two-stage power converter using a conventional buck-boost converter and a half-bridge type bus converter, and FIG. 6b illustrates a circuit diagram of a two-stage power converter using a conventional buck-boost converter and a full-bridge type bus converter.

The two-stage power converter illustrated in FIG. 2 is operated with a fixed frequency and a fixed duty ratio of 0.5 without a change in the duty ratio or modulation of the frequency of active switches used in the bus converter. Therefore, the final output of the two-stage power converter including the bus converter may be controlled by changing the duty ratio of the buck-boost converter using the four active switches.

In addition, in the case of the bus converter including a half-bridge structure, as illustrated in FIG. 6a, $M_5$ and $M_6$ conduct a current alternately with a fixed frequency and a duty ratio of 0.5. In the case of the bus converter including a full-bridge structure, as illustrated in FIG. 6b, $M_5$ and $M_8$ are synchronized with each other to operate with the same timings and $M_6$ and $M_7$ are synchronized with each other to operate with the same timings and, at the same time, conduct a current alternately with a duty ratio of 0.5.

That is, two switches connected in series in a bus converter having a half-bridge structure and a full-bridge structure may conduct a current alternately with a fixed duty ratio of 0.5, and the above-described operation may be the same as the switching method for $M_3$ and $M_4$ of the buck-boost converter according to an embodiment of the present invention as described above.

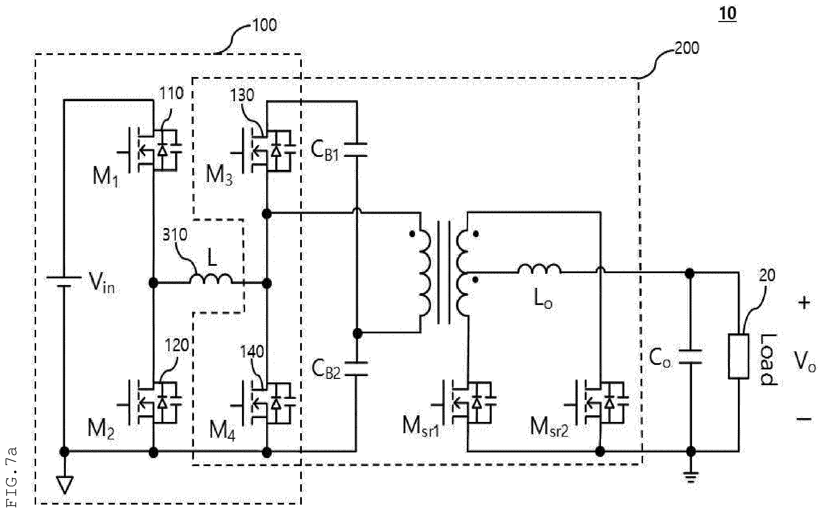

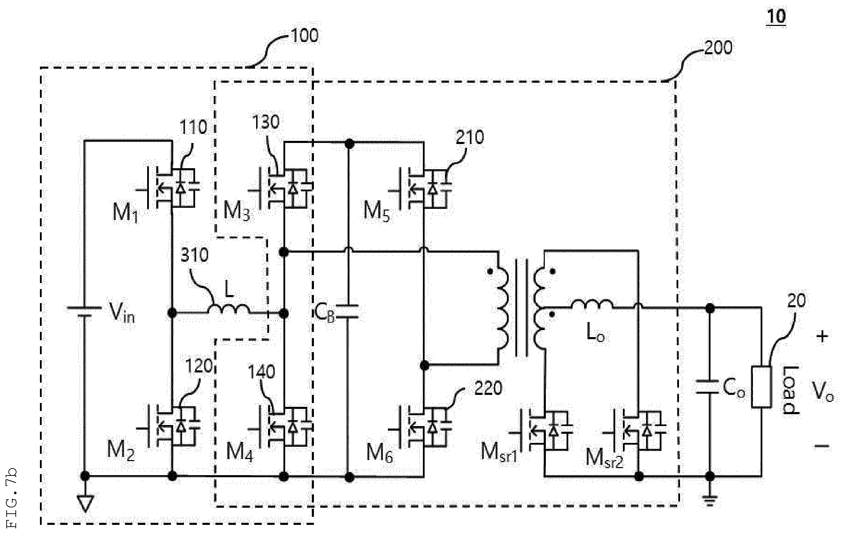

FIG. 7a illustrates a circuit diagram of a two-stage power converter using a half-bridge type bus converter according to an embodiment of the present invention, and FIG. 7b illustrates a circuit diagram of a two-stage power converter using a full-bridge type bus converter according to an embodiment of the present invention.

Referring to FIG. 7a, the two-stage power converter 10 according to an embodiment of the present invention may include a buck-boost converter unit 100 including a DC-DC converter 100 according to an embodiment of the present invention, a bus converter unit 200 including a bus converter connected in a bull-bridge or half-bridge topology, and an inductor unit connected to the buck-boost converter unit 100 and the bus converter unit 200 and including at least one inductor. When the bus converter unit 200 is connected in a full-bridge topology, the bus converter unit 200 may further include fifth and sixth switches 210 and 220, and the third and fourth switches $M_3$ and $M_4$ 130 and 140 of the buck-boost converter unit 100 may be shared with the bus converter unit 200.

Therefore, in the case of performing the switching method on the buck-boost converter using four active switches according to an embodiment of the present invention as illustrated in FIGS. 4a to 4c, not the switching method illustrated in FIGS. 3a and 3b, it is possible to use $M_3$ and $M_4$ of the buck-boost converter illustrated in FIG. 1 as the active switches of the bus converter, thereby reducing the number of the active switches to simplify a circuit in implementing the two-stage power converter 10 including the bus converter.

The first inductor 310 of the two-stage power converter 10 according to an embodiment of the present invention may be connected to a bridge configured with the active switches $M_3$ and $M_4$ and also to a bridge configured with the active switches $M_5$ and $M_6$ as illustrated in FIG. 7b.

In a case where the bus converter unit 200 according to the embodiment of the present invention is connected in a half-bridge topology, the driving frequency of the first and second switches 110 and 120 may be different from the driving frequency of the third and fourth switches 130 and 140 and the phase of the first and second switches 110 and 120 may be different from the phase of the third and fourth switches 130 and 140. In a case where the bus converter unit 200 of the two-stage power converter 10 is connected in a full-bridge topology, the driving frequency of the first and second switches 110 and 120 may be different from the driving frequency of the third and fourth switches 130 and 140 and the phase of the first and second switches 110 and 120 may be different from the phase of the third and fourth switches 130 and 140.

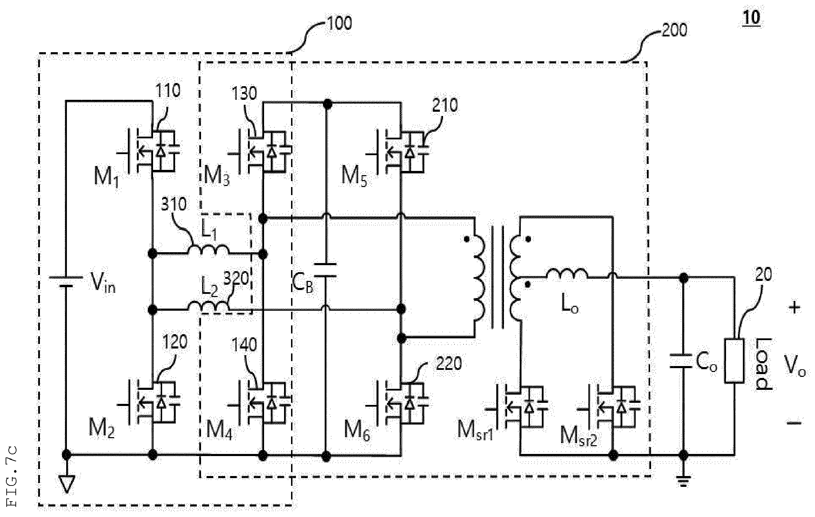

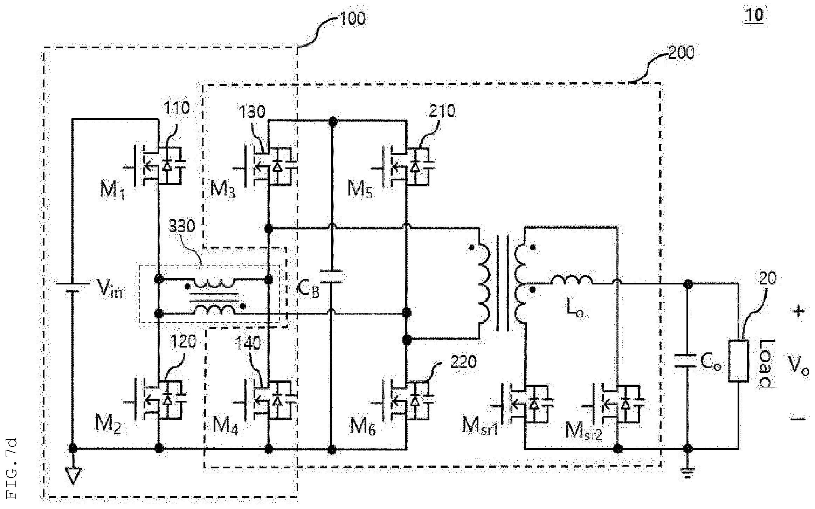

FIG. 7c illustrates a circuit diagram of the two-stage power converter 10 having first and second inductors 310 and 320 according to an embodiment of the present invention, and FIG. 7d illustrates a circuit diagram of the two-stage power converter 10 having a coupled-inductor 330 according to an embodiment of the present invention.

In a case where the bus converter unit 200 of the two-stage power converter 10 according to an embodiment of the present invention is connected in a full-bridge topology, the inductor unit may include a first inductor 310 and a second inductor 320, and a current flowing through a bridge including the third and fourth switches 130 and 140 and a current flowing through a bridge including the fifth and sixth switches 210 and 220 via the first inductor 310 and the second inductor 320 may flow symmetrically. In this case, the first and second inductors 310 and 320 may have the same inductance value.

In addition, the inductor unit may include a coupled-inductor 330 coupled to the buck-boost converter unit 100 and the bus converter unit 200 by electromagnetic coupling, wherein the two windings may have the same inductance value.

When the bus converter unit 200 of the two-stage power converter 10 according to an embodiment of the present invention is connected in full-bridge topology, the duty ratio and the turned-on time point of the third switch 130 may be identical to those of the sixth switch 220, and the duty ratio and the turned-on time point of the fourth switch 140 may be identical to those of the fifth switch 210.

An embodiment of the present invention may also be embodied in the form of a recording medium including instructions executable by a computer, such as program modules executed by a computer. Computer readable media can be any available media that can be accessed by a computer and includes both volatile and nonvolatile media, and removable and non-removable media. The computer readable media may include both computer storage media and communication media. Computer storage media includes volatile and nonvolatile, removable and non-removable media implemented in any method or technology for storage of information such as computer readable instructions, data structures, program modules or other data. Communication media typically embodies computer readable instructions, data structures, program modules, or other data in a modulated data signal such as carrier wave or other transport mechanism and included any information delivery media.

It will be understood by those skilled in the art that the foregoing description of the present invention is for illustrative purposes only and that those of ordinary skill in the art can readily understand that various changes and modifications may be made without departing from the spirit or essential characteristics of the present invention. It is therefore to be understood that the above-described embodiments are illustrative in all aspects and not restrictive. For example, each component described as a single entity may be distributed and implemented, and components described as being distributed may also be implemented in a combined form.

The scope of the invention is, therefore, indicated by the appended claims rather than by the foregoing description. All changes which come within the meaning and range of equivalency of the claims are to be embraced within their scope.

**Claims**

1. A DC-DC converter capable of step-up operation and step-down operation, comprising:

   a plurality of active switches,
   wherein some of the plurality of active switches operate with a variable duty ratio (D),
   wherein the remaining active switches operate with a fixed duty ratio, and
   wherein an input-output voltage conversion ratio of the DC-DC converter is determined based on the variable duty ratio (D) and an output of the DC-DC converter is controlled by adjusting the variable duty ratio D.

2. The DC-DC converter of claim 1,
   wherein the plurality of active switches include four active switches of a first switch ($M_1$), a second switch ($M_2$), a third switch ($M_3$), and a fourth switch ($M_4$), and
   wherein the second switch is replaceable with a diode.

3. The DC-DC converter of claim 1 or 2,
   wherein the DC-DC converter includes a first inductor and is formed of a buck-boost converter,
   wherein, when the second switch is an active switch, the first switch and the second switch operate alternately with variable duty ratios of D and 1-D respectively,
   wherein the third and fourth switches operate alternately with the fixed duty ratio of 0.5, and
   wherein operation conversion between a buck converter and a boost converter is performed at a time point at which an input voltage and an output voltage of the buck-boost converter become equal to each other.

4. The DC-DC converter of claim 1 or 2,
   wherein a driving frequency of the first and second switches is different from a driving frequency of the third and fourth switches.

5. The DC-DC converter of claim 1 or 2,
   wherein a phase of the first and second switches is different from a phase of the third and fourth switches.

6. A two-stage power converter comprising:

   a buck-boost converter unit including the DC-DC converter according to claim 2;
   a bus converter unit including a bus converter connected in a full-bridge or half-bridge topology; and
   an inductor unit connected to the buck-boost converter unit and the bus converter unit and including at least one inductor,
   wherein, when the bus converter is connected in the full-bridge topology, the bus converter further includes a fifth switch ($M_5$) and a sixth switch ($M_6$), and
   wherein the third and fourth switches of the buck-boost converter unit are shared with the bus converter.

7. The two-stage power converter of claim 6,
   wherein, when the bus converter unit is connected in the half-bridge topology, a driving frequency of the first and second switches is different from a driving frequency of the third and fourth switches.

8. The two-stage power converter of claim 6,
   wherein, when the bus converter unit is connected in the half-bridge topology, a phase of the first and second switches is different from a phase of the third and fourth switches.

9. The two-stage power converter of claim 6,
   wherein, when the bus converter unit is connected in the full-bridge topology, the inductor unit includes a first inductor and a second inductor, and a current flowing through a bridge including the third and fourth switches and a current flowing through a bridge including the fifth and sixth switches, via the first inductor and the second inductor flow symmetrically to each other.

10. The two-stage power converter of claim 6,
    wherein, when the bus converter unit is connected in the full-bridge topology, the inductor unit includes a coupled-inductor connected to the buck-boost converter unit and the bus converter unit by electromagnetic coupling.

**11.** The two-stage power converter of any one of claims 6, 9 and 10,
wherein, when the bus converter unit is connected in the full-bridge topology, a driving frequency of the first and second switches is different from a driving frequency of the third and fourth switches.

**12.** The two-stage power converter of any one of claims 6, 9 and 10,
wherein, when the bus converter unit is connected in the full-bridge topology, a phase of the first and second switches is different from a phase of the third and fourth switches.

**13.** The two-stage power converter of any one of claims 6, 9 and 10,
wherein, when the bus converter unit is connected in the full-bridge topology, a duty ratio and a turned-on time point of the third switch are identical to a duty ratio and a turned-on time point of the sixth switch, and a duty ratio and a turned-on time point of the fourth switch are identical to a duty ratio and a turned-on time point of the fifth switch.

FIG.1

FIG.2

FIG.3a

FIG.3b

FIG.4a

FIG.4b

FIG.4c

FIG.5a

FIG.5b

FIG.6a

FIG.6b

FIG. 7a

EP 3 512 086 A1

21

FIG.7b

FIG.7c

FIG.7d

## INTERNATIONAL SEARCH REPORT

| International application No. |
| --- |
| **PCT/KR2017/004700** |

### A. CLASSIFICATION OF SUBJECT MATTER

*H02M 3/158(2006.01)i*

According to International Patent Classification (IPC) or to both national classification and IPC

### B. FIELDS SEARCHED

Minimum documentation searched (classification system followed by classification symbols)
H02M 3/158; H02M 3/335; H02M 1/08; H02M 3/22; G05F 1/24; H02J 7/00; H02M 3/28

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: DC-DC converter, switch, duty ratio, variableness, fixing, voltage, conversion ratio, step-up, step-down

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2014-0143908 A (HYUNDAI MOTOR COMPANY) 18 December 2014 | 1 |
| | See paragraphs [21]-[59] and figures 1-6. | |
| Y | | 2,5 |
| A | | 3-4,6-13 |
| Y | KR 10-2016-0007867 A (HYUNDAI MOTOR COMPANY) 21 January 2016 | 2,5 |
| | See paragraphs [28]-[42] and figures 3-4. | |
| Y | US 2004-0027101 A1 (VINCIARELLI, Patrizio) 12 February 2004 | 5 |
| | See paragraphs [50]-[82] and figures 3-16. | |
| A | US 2014-0268890 A1 (ANALOG DEVICES TECHNOLOGY) 18 September 2014 | 1-13 |
| | See the entire document. | |
| A | JP 2009-060747 A (TDK-LAMBDA CORP. et al.) 19 March 2009 | 1-13 |
| | See the entire document. | |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 AUGUST 2017 (08.08.2017) | **08 AUGUST 2017 (08.08.2017)** |
| Name and mailing address of the ISA/KR | Authorized officer |
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2017/004700**

| Patent document cited in search report | Publication date | Patent family member | Publication date |
|---|---|---|---|
| KR 10-2014-0143908 A | 18/12/2014 | CN 104242637 A<br>KR 10-1526666 B1<br>US 2014-0362605 A1 | 24/12/2014<br>05/06/2015<br>11/12/2014 |
| KR 10-2016-0007867 A | 21/01/2016 | NONE | |
| US 2004-0027101 A1 | 12/02/2004 | EP 1388927 A2<br>EP 1388927 A3<br>JP 2004-166484 A<br>US 2004-0239299 A1<br>US 6788033 B2<br>US 7154250 B2 | 11/02/2004<br>19/10/2005<br>10/06/2004<br>02/12/2004<br>07/09/2004<br>26/12/2006 |
| US 2014-0268890 A1 | 18/09/2014 | US 9041372 B2 | 26/05/2015 |
| JP 2009-060747 A | 19/03/2009 | NONE | |

Form PCT/ISA/210 (patent family annex) (January 2015)